# EUROPÄISCHE PATENTSCHRIFT

(11) **EP 1 132 260 B1**
(45) Veröffentlichungstag und Bekanntmachung des Hinweises auf die Patenterteilung: **22.09.2004**
(21) Anmeldenummer: 01104972.3
(22) Anmeldetag: 01.03.2001
(51) Int. Cl.: B60R 21/06, B60R 22/20

(54) **Vorrichtung zur Halterung eines Gurthöhenversteller oder einer Haltestange einer Netztrennwand**
Device for holding a safety belt height adjustment device or a partitioning net support bar
Dispositif pour retenir un dispositif de réglage en hauteur d'une ceinture ou une barre de support d'une cloison à filet

(30) Priorität: 11.03.2000 DE 10011907; 15.02.2001 DE 10106994
(43) Veröffentlichungstag der Anmeldung: 12.09.2001
(73) Patentinhaber: Dr.Ing. h.c.F. Porsche Aktiengesellschaft, 70435 Stuttgart (DE)
(72) Erfinder: Eberle, Wilfried, 89584 Ehingen (DE)

(56) Entgegenhaltungen:
- EP-A- 0 927 668
- DE-A- 4 010 209
- US-A- 4 871 192
- US-A- 5 529 344
- US-A- 5 826 907
- US-A- 5 836 613

## Beschreibung

Die Erfindung bezieht sich auf eine Vorrichtung nach dem Oberbegriff des Patentanspruchs 1.

Aus der DE 196 51 092 A1 ist eine Sicherheitsgurtvorrichtung bekannt, bei der ein Ankerelement mittels einer in einem Absorptionselement gehaltenen Schraube mit dem Fahrzeugaufbau verbunden ist. Die Schraube ist an einer Säule des Fahrzeugs über ein Federelement in Lage gehalten. Desweiteren ist aus der US 5,836,613 eine Sicherheitsgurtvorrichtung bekannt, die mit einer Fahrzeugsäule über einen Verbindungsbolzen befestigt und mit einem Kegelelement verbunden ist, das in einem Halteteil mittels übergreifender Klauen oder dgl. festgesetzt wird. Bei einem Kopfaufprall löst sich das Kegelelement durch Aufbiegen der übergreifenden Klauen, so daß eine gewisse Absorption der Aufprallenergie bewirkt wird. Ferner ist aus der DE 295 19 483 U1 eine Vorrichtung zum Stützen eines Sicherheitsgurtbandes in einem Kraftfahrzeug mit einem über Schulterhöhe eines zu sichernden Fahrzeuginsassen am Fahrzeugaufbau verankerten End- oder Umlenkbeschlag für das Gurtband bekannt. Zwischen dem End- oder Umlenkbeschlag und dem Fahrzeugaufbau ist an der Verankerungsstelle ein Energieabsorber angeordnet, der bei einer auf den End- oder Umlenkbeschlag vom Fahrzeuginneren nach außen gerichteten Kraft wirksam wird.

Aus der gattungsbildenden US 5,529,344 ist eine Vorrichtung zur Halterung eines Gurthöhenverstellers bekannt, bei der über einem Bolzen eine Ankerplatte für einen Sicherheitsgurt mit einer Wandung einer Fahrzeugsäule verbunden wird. Der Bolzen wird unter Zwischenschaltung eines Deformationselements mit der Wandung verbunden, wobei in weiteren Ausführungen auch sogenannte Hülsen zwischengeschaltet werden können, die einerseits mit dem Bolzen und andererseits mit einer Wandung des Fahrzeugs verbindbar sind.

Aufgabe der Erfindung ist es, eine Vorrichtung zur Halterung eines Gurthöhenverstellers eines Sicherheitsgurtsystems oder für eine Halterung einer Netztrennwand in einem Kraftfahrzeug zu schaffen, bei der eine sichere und optimal anziehbare und Biegemomente aufnehmende Verbindungsschraube für den Gurthöhenversteller bzw. für die Haltestange gewährleistet ist und bei einem Kopfaufprall eine Deformation der Halterung oder der Befestigung für den Gurthöhenversteller gewährleistet ist. Diese Aufgabe wird erfindungsgemäß durch die Merkmale des Patentanspruchs 1 gelöst. Weitere vorteilhafte Merkmale bilden die Unteransprüche.

Nach einer Ausführung der Erfindung ist die Rastschiene eines Sicherheitsgurtsystems mit einem als Trägerplatte ausgebildeten Aufnahmeelement unter Zwischenschaltung eines Deformationselements an einer Säulenwand des Fahrzeugaufbaus gehalten. Mittels einer von der Rastschiene aus durchgeführten und in einem Gewindekopf eines Hülsenelements gehaltene Befestigungsschraube ist der Gewindekopf in einer Betriebsstellung anliegend an einer inneren Fläche der Säulenwand angeordnet. Bei einer Kopfaufprallstellung ist durch Deformation des Deformationselements der Gewindekopf des Hülsenelements losgelöst von der Säulenwand. Hierdurch wird auch ein definierbares und sicheres Anziehen der Schraube erzielt und das Hülsenelement übernimmt die aus einem Gurtzug resultierenden Biegemomente.

Nach einer weiteren Ausführung der Erfindung kann das Deformationselement auch für eine Haltestange einer Netztrennwand in einem Kraftfahrzeug Verwendung finden. Diese Netztrennwand ist quer im Fahrzeug angeordnet und jeweils seitlich im Fahrzeugaufbau über die Haltestangen befestigt. Diese Netztrennwand dient zum Zurückhalten von im Heck des Fahrzeugs angeordneten Tieren, Gegenständen oder dgl., die bei einem starken Abbremsen des Kraftfahrzeugs bzw. bei einem Crashfall nach vorne geschleudert werden. In diesem Fall besteht das Aufnahmeelement jeweils aus einem Verriegelungselement mit einer schlüssellochförmigen Aufnahmeöffnung für das freie Ende der Haltestange der Netztrennwand. Dieses freie Ende ist mit einem Bund versehen, der die schlüssellochförmige Aufnahmeöffnung hintergreift und somit festsetzbar ist. Damit bei einem Kopfaufprall auf diese Stange eine Deformation bzw. ein Zurückweichen erfolgt, ist das Deformationselement zwischen der Aufbausäule und dem Aufnahmeelement, wie beispielsweise dem Verriegelungselement gehalten.

Das Hülsenelement erstreckt sich vorzugsweise vom Aufnahmeelement (Trägerplatte, Verriegelungselement) durch das Deformationselement und stützt sich mit dem Gewindekopf an einer inneren Wandfläche der Säule des Fahrzeugaufbaus ab. Im Gewindekopf des Hülsenelements ist die Befestigungsschraube gehalten derart, daß eine Verspannung des Aufnahmeelements an der Säulenwand zwischen dem Gewindekopf des Hülsenelements und dem Kopf der Befestigungsschraube erfolgt.

Mit der Säulenwand ist ein Führungselement für den Gewindekopf verbunden, welches innenseitig gegenüberstehende axial verlaufende Nuten aufweist, in denen korrespondierend mit diesen Nuten im Gewindekopf des Hülsenelements angeformte äußere axiale Stege geführt werden.

Das Hülsenelement sitzt in Y-Richtung beweglich im Führungselement, das fest mit einem inneren Verstärkungsblech bzw. mit einer Wandung der Säule des Fahrzeugaufbaus verbunden ist. Im Kopf des Hülsenelements sind im Bereich der Stege Einkerbungen vorgesehen, wobei zwischen diesen Einkerbungen und den axialen Nuten im Führungselement Klemmelemente, wie beispielsweise Federelemente oder dgl. angeordnet sind. Damit die Gewindemutter beim Anziehen der Verbindungsschraube nicht mitdrehen kann, ist sie mit den zwei axialen Stegen versehen.

Um die Gewindemutter des Hülsenelements vor einer Montage in der richtigen Position zu halten bzw. ein Ersetzen des Deformationselements nach einem Kopfaufprall in einfacher Weise zu ermöglichen, ist das Führungselement beispielsweise mit einer oder mit zwei Sicherungsfedern versehen. Diese befinden sich entweder in den Nuten für die Stege der Gewindemutter und verrasten in entsprechenden Einkerbungen oder sind um 90° dazu versetzt angeordnet.

Ausführungsbeispiele der Erfindung sind in den Zeichnungen dargestellt und werden im Folgenden näher beschrieben.

Es zeigen:

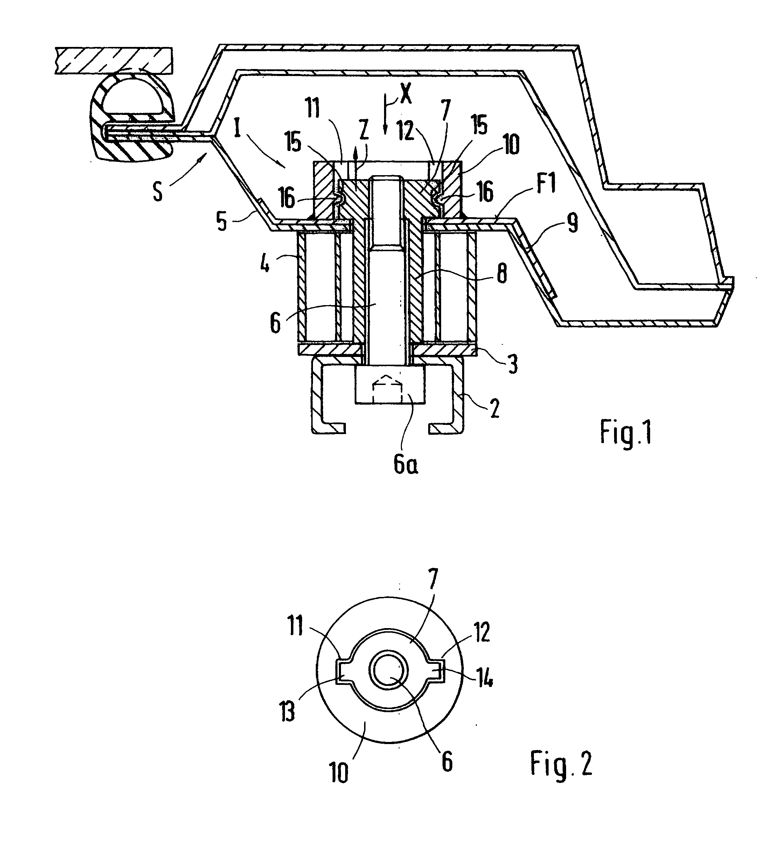

- Fig. 1: einen Horizontalschnitt durch eine Fahrzeugsäule mit Deformationselement und einer eingesetzten Vorrichtung für einen Gurthöhenversteller,
- Fig. 2: eine Ansicht auf die Vorrichtung in Pfeilrichtung X gesehen und

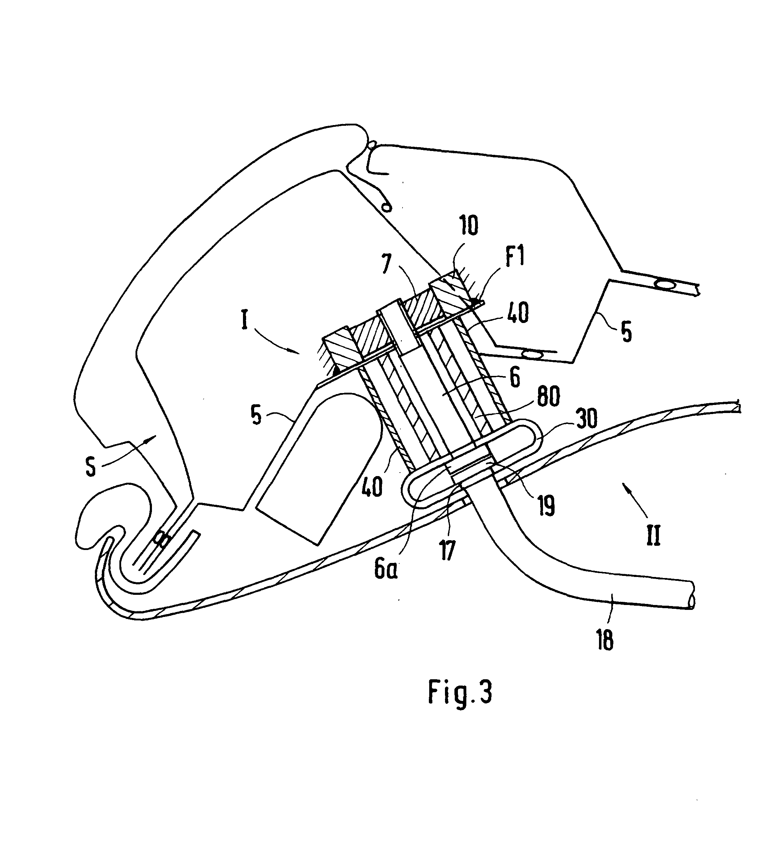

- Fig. 3: eine weitere Ausführung des Deformationselements zur Verwendung für eine Haltestange einer Netztrennwand in einem Kraftfahrzeug.

Nach einer ersten Ausführung ist das Deformationselement für ein Sicherheitsgurtsystem vorgesehen, welches eine Einrichtung mit einem Aufnahmeelement, wie eine Trägerplatte 3 umfaßt, welche mit einer Rastschiene 2 des Gurtsystems verbindbar ist. Das Deformationselement 4 ist zwischen der Trägerplatte 3 und einer Wand 5 einer Aufbausäule S angeordnet. Die Rastschiene 2 wird an der Säule S über mindestens eine Verbindungsschraube 6 gehalten, die in einem Gewindekopf 7 eines Hülsenelements 8 einschraubbar ist. Das Hülsenelement 8 ist in der Weise ausgeführt, daß sich der Gewindekopf 7 in der Säule S beispielsweise an einem Verstärkungsblech 9, aber ansonsten unmittelbar an der Wand 5 abstützt und mit seinem anschließenden zylindrischen Hülsenteil sich axial durch das Deformationselement 4 bis zur Trägerplatte 3 erstreckt und sich hier mit seiner Stirnfläche abstützt. Der Gewindekopf 7 ist in einer Führungshülse 10 angeordnet, die beispielsweise mit dem Verstärkungsblech 9 verbunden und an der Säulenwand 5 befestigt ist.

Nach einer weiteren Ausführung der Erfindung wird das Deformationselement 40 für die Haltestangen 18 einer quer im Fahrzeug angeordneten Netztrennwand verwendet. Als Aufnahmeelement für die freien Enden der Haltestangen 18 wird ein ovalförmiges Verriegelungselement 30 verwendet, das zwischen dem Deformationselement 40 und der Stange 18 angeordnet ist. Die Stange 18 weist am freien Ende einen Bund 19 auf, welche in eine schlüssellochförmige Aufnahmeöffnung 17 einführbar und in dieser verrastbar ist. Der Bund 19 steht dem Schraubenkopf 6a der Befestigungsschraube 6 gegenüber, so daß bei einem Kopfaufprall eine Krafteinleitung in das Deformationselement 40 erfolgen kann.

Die Führungshülse 10 weist axialverlaufende innenliegende Nuten 11, 12 auf, die sich gegenüberliegen und in denen außenliegende axiale Stege 13, 14 des Gewindekopfes 10 geführt sind. Hierdurch wird bei einem Kopfaufprall der Gewindekopf 7 mit Hülsenelement 8 in Pfeilrichtung Z unter Zusammendrücken des Deformationselements 4; 40 gezielt verschoben, so daß dieser sich von der Wandfläche F1 loslöst.

Damit die Führungshülse 8 beim Einbau in Lage gehalten werden kann, ragt in mindestens eine Kerbe 15 des Gewindekopfes 7 eine Sicherungsfeder 16 hinein, die am Führungselement 10 klemmend gehalten wird.

## Patentansprüche

1. Vorrichtung zur Halterung eines Gurthöhenverstellers eines Sicherheitsgurtsystems oder einer Haltestange (18) für eine Netztrennwand in einem Kraftfahrzeug, wobei zwischen einem Aufnahmeelement (3; 30) und einer Fahrzeugsäule (S) ein Deformationselement (4; 14) angeordnet ist, und das Aufnahmeelement (3; 30) unter Zwischenschaltung des Deformationselements (4; 40) an einer Wand (5) der Fahrzeugsäule (S) gehalten wird, **dadurch gekennzeichnet, dass** mittels einer vom Aufnahmeelement (3; 30) aus axial durchgeführten und in einem Gewindekopf (7) eines Hülsenelements (8; 80) befestigten Schraube (6) der Gewindekopf (7) in einer Betriebsstellung (I) anliegend an einer inneren Fläche (F1) der Wand (5) der Fahrzeugsäule und bei einer Kopf-Aufprallstellung (II) der Gewindekopf (7) losgelöst von der Fläche (F1) angeordnet ist und das Hülsenelement (8; 80) sich vom Aufnahmeelement (Trägerplatte 3; Verriegelungselement 30) axial durch das Deformationselement (4) erstreckt und mit seinem Gewindekopf (7) an der inneren Fläche (F1) der Wand (5) abgestützt ist und das Aufnahmeelement (3; 30) über die Schraube (6) an der Säulenwand (5) zwischen dem Gewindekopf (7) des Hülsenelements (8; 80) und dem Kopf (6a) der Befestigungsschraube verspannbar ist.

2. Vorrichtung nach Anspruch 1, **dadurch gekennzeichnet, daß** die Trägerplatte (3) zwischen einer Rastschiene (2) des Gurthöhenverstellers und dem Deformationselement (4) angeordnet ist.

3. Vorrichtung nach den Ansprüchen 1 oder 2, **dadurch gekennzeichnet, daß** das Verriegelungselement (30) einerseits über den Schraubenkopf (6a) am Deformationselement (40) festsetzbar und andererseits mit der Haltestange (18) verbindbar ist.

4. Vorrichtung nach den Ansprüchen 1 oder 3, **dadurch gekennzeichnet, daß** das Verriegelungselement (30) eine schlüsselförmige Einstecköffnung (17) für die Haltestange (18) aufweist, welche endseitig einen Bund (19) umfaßt, der zum Festsetzen der Stange die schlüssellochförmige Öffnung (17) im Verriegelungselement (30) untergreift.

5. Vorrichtung nach einem oder mehreren der vorhergehenden Ansprüche, **dadurch gekennzeichnet, daß** mit der Säulenwand (5) ein Führungselement (10) verbunden ist, welches innenseitig gegenüberstehende axialverlaufende Nuten (11, 12) aufweist, in denen mit diesen Nuten (11, 12) korrespondierende und im Gewindekopf (7) des Hülsenelements (8; 80) angeformte äußere axiale Stege (13, 14) geführt sind.

6. Deformationselement nach einem oder mehreren der vorhergehenden Ansprüche, **dadurch gekennzeichnet, daß** im Gewindekopf (7) des Hülsenelements (8) im Bereich der Stege (13, 14) Einkerbungen (15) vorgesehen sind und zwischen diesen Einkerbungen (15) und den Nuten (11, 12) des Führungselements (10) Klemmelemente (16) angeordnet sind.

## Claims

1. A device for mounting a belt height adjuster for a safety belt system or a support bar (18) for a mesh partition in a motor vehicle, wherein a deformation member (4; 14 [*sic* - 40]) is arranged between a receiving member (3; 30) and a vehicle pillar (S), and the receiving member (3; 30) is held on a wall (5) of the vehicle pillar (S) with the interposition of the deformation member (4; 40), **characterised in that**, by means of a bolt (6) which extends axially through the receiving member (3; 30) and is fixed in a threaded head (7) of a sleeve member (8; 80), the threaded head (7) rests against an inner surface (F1) of the wall (5) of the vehicle pillar in an operating position (I) and is detached from the surface (F1) in a front impact position (II), and the sleeve member (8; 80) extends from the receiving member (supporting plate 3; locking member 30) axially through the deformation member (4) and is supported by its threaded head (7) against the inner surface (F1) of the wall (5), and the receiving member (3; 30) is braceable against the pillar wall (5) by the bolt (6) between the threaded head (7) of the sleeve member (8; 80) and the head (6a) of the fixing bolt.

2. A device according to claim 1, **characterised in that** the supporting plate (3) is arranged between a locking rail (2) of the belt height adjuster and the deformation member (4).

3. A device according to claim 1 or 2, **characterised in that** the locking member (30) is securable on one side to the deformation member (40) by the bolt head (6a) and on the other side is connectable to the support bar (18).

4. A device according to claim 1 or 3, **characterised in that** the locking member (30) has a key-shaped insertion opening (17) for the support bar (18) which is provided at its end with a collar (19) engaging behind the keyhole-shaped opening (17) in the locking member (30) in order to secure the bar.

5. A device according to one or more of the preceding claims, **characterised in that** a guide member (10) is connected to the pillar wall (5) and has inner opposing, axially extending grooves (11, 12) in which are guided outer axial ribs (13, 14) corresponding to these grooves (11, 12) and formed on the threaded head (7) of the sleeve member (8; 80).

6. A deformation member according to one or more of the preceding claims, **characterised in that** notches (15) are provided in the threaded head (7) of the sleeve member (8) in the region of the ribs (13, 14), and clamping members (16) are arranged between these notches (15) and the grooves (11, 12) of the guide member (10).

## Revendications

1. Dispositif de fixation d'un organe de réglage de la hauteur d'une ceinture d'un système de ceinture de sécurité ou d'une barre de retenue (18) d'une séparation à filet dans un véhicule automobile, dans lequel un élément de déformation (4 ; 14) est disposé entre un élément d'ancrage (3 ; 30) et un montant (S) du véhicule, et l'élément d'ancrage (3 ; 30) est maintenu, avec interposition de l'élément de déformation (4 ; 40), sur une paroi (5) du montant (S) du véhicule, **caractérisé en ce qu'**au moyen d'une vis (6) ressortant axialement de l'élément d'ancrage (3 ; 30) et fixée dans une tête taraudée (7) d'un élément de douille (8 ; 80), la tête taraudée (16) est disposée, dans une position d'utilisation (I), de manière à s'appliquer contre une surface intérieure (F1) de la paroi (5) du montant du véhicule, et, dans le cas d'un choc de la tête (II), la tête taraudée (7) est disposée détachée de la surface (F1), et l'élément de douille (8 ; 80) s'étend axialement depuis l'élément d'ancrage (plaque de support 3 ; élément de verrouillage 30) à travers l'élément de déformation (4) et est soutenu par sa tête taraudée (7) contre la surface intérieure (F1) de la paroi (5), et l'élément d'ancrage (3 ; 30) peut être serré, par la vis (6), contre la paroi (5) du montant entre la tête taraudée (7) de l'élément de douille (8 ; 80) et la tête (6a) de la vis de fixation.

2. Dispositif selon la revendication 1, **caractérisé en ce que** la plaque de support (3) est disposée entre un rail d'encliquetage (2) de l'organe de réglage de la hauteur de la ceinture et l'élément de déformation (4).

3. Dispositif selon les revendications 1 ou 2, **caractérisé en ce que** l'élément de verrouillage (30) peut être fixé d'une part, par la tête de vis (6a), à l'élément de déformation (40) et peut-être relié d'autre part à la barre de retenue (18).

4. Dispositif selon les revendications 1 ou 3, **caractérisé en ce que** l'élément de verrouillage (30) présente une ouverture d'enfichage (17) en forme de trou de serrure pour la barre de retenue (18), laquelle entoure à une extrémité un épaulement (19) qui, pour fixer la barre, passe sous l'ouverture (17) en forme de trou de serrure ménagée dans l'élément de verrouillage (30).

5. Dispositif selon une ou plusieurs des revendications précédentes,
**caractérisé en ce qu'**à la paroi (5) du montant est relié un élément de guidage (10) qui présente côté intérieur des rainures (11, 12) s'étendant axialement, se faisant face, dans lesquelles sont guidées des nervures axiales (13, 14) extérieures correspondant à ces rainures (11, 12) et formées dans la tête taraudée (7) de l'élément de douille (8 ; 80).

6. Élément de déformation selon une ou plusieurs des revendications précédentes, **caractérisé en ce que** dans la tête taraudée (7) de l'élément de douille (8), des encoches (15) sont prévues dans la zone des nervures (13, 14) et entre ces encoches (15) et les nervures (11, 12) de l'élément de guidage (10) sont disposés des éléments de serrage (16).
